# EUROPEAN PATENT SPECIFICATION

(11) **EP 1 497 363 B1**
(45) Date of publication and mention of the grant of the patent: **12.06.2013**
(21) Application number: 02735287.1
(22) Date of filing: 23.04.2002
(51) Int. Cl.: C08K 5/20, B60C 1/00, C08K 5/098

(54) **TYRE COMPRISING AN ELASTOMERIC COMPOSITION HAVING A HIGH WEAR RESISTANCE**
LUFTREIFEN MIT EINER ELASTOMERMISCHUNG MIT HOHEM ABNUTZUNGSWIDERSTAND
PNEUMATIQUE AVEC UNE COMPOSITION A GRANDE RESISTANCE A L'USURE

(43) Date of publication of application: 19.01.2005
(73) Proprietor: Pirelli Tyre S.p.A., 20126 Milano (IT)
(72) Inventor: SCHAAL, Stephane, 5200 Brugg (CH); MARTIN, Mario, I-20099 Sesto San Giovanni (IT); MIGLIARINI, Luigi, I-20052 Monza (IT)
(74) Representative: Bottero, Claudio
(86) International application number: PCT/EP2002/004455
(87) International publication number: WO 2003/091324

(56) References cited:
- EP-A- 0 469 778
- EP-A- 0 823 417
- WO-A-84/04530
- US-A- 4 534 799
- US-A- 5 656 680

## Description

The present invention relates to a tyre for vehicle wheels.

More particularly, the present invention relates to a tyre for vehicle wheels comprising at least one structural element made of crosslinked elastomeric material including at least one fatty acid amide and at least one zinc salt of a carboxylic acid.

In the rubber industry, in particular in the industry for production of vehicle wheel tyres, use of elastomeric compositions is known in which reinforcing fillers are incorporated into the elastomeric base for the purpose of improving the features of the crosslinked manufactured article, in particular mechanical properties and abrasion resistance.

Due to its high reinforcing power, carbon black is the most widely used reinforcing filler. However, carbon black gives the crosslinked manufactured article marked hysteresis features, i.e. an increase in the heat dissipated under dynamic conditions which, as known, in the case of a tyre, gives rise to an increase of the rolling resistance of the tyre itself. This leads about an increase in the vehicle fuel consumption and, consequently, an increase both in the locomotion costs and in air pollution. An attempt to reduce these negative effects can be made by using smaller amounts of carbon black and/or a carbon black having a reduced surface area. This however, inevitably leads to a reduction in the reinforcing action which worsen mechanical properties and abrasion resistance of the finished product. On the other hand, when carbon black is used in an excessive amount, a problem arises in that the elastomeric compositions become excessively hard to cause difficulty in industrial processing, the dispersion of carbon black in the elastomeric compositions becomes inferior and, also in this case, a reduction in the reinforcing action is obtained.

To overcome said drawbacks, the so-called "white" reinforcing fillers such as gypsum, talc, kaolin, bentonite, titanium dioxide, silicates of various types and, above all, silica, are usually used, in total or partial replacement for the carbon black. In this connection, reference can be made to European Patent EP 501,227, for example. However, also in this case there are a series of drawbacks essentially related to the poor affinity of silica with respect to the elastomers commonly used in the production of tyres. Moreover, dispersion of silica in the elastomeric compositions becomes inferior and the high viscosity of the same cause difficulty in industrial processing.

To obtain a good degree of dispersion of said reinforcing fillers, both carbon black and silica, processing aids such as, for example, aromatic oil, are usually added to the elastomeric compositions. In some instances, however, attemps to include large amounts of oils into elastomeric compositions result in loss of other desirable properties such as, for example, tensile strength, wear resistance and heat resistance.

Moreover, in the case of silica, to increase affinity of silica for the elastomeric matrix, appropriate coupling agents are currently used such as, for example, sulphur-containing organosilane products having two different groups: a first group which is able to interact with the silanol groups present on the silica surface, a second group able to promote interaction with the sulphur-vulcanizable elastomeric polymers. Use of said coupling agents however, limits the maximum temperature that can be achieved during the mixing and thermomechanical-working operations of the elastomeric compositions, under penalty of an irreversible thermal degradation of the coupling agent. In addition, the high cost of said coupling agents adversely affects the cost of the finished product.

Other attempts have been made in the prior art to improve the dispersability of said reinforcing fillers into the elastomeric compositions.

For example, patent application FR 2,790,478 describes a rubber composition comprising 100 part by weight of rubber and at least 20 part by weight of silica and at least an amide-containing compound, a phenolic resin and a hardening agent for said resin. Said amide-containing compound can be selected from: formamide, acetamide, propionamide, butyramide, capronamide, acid lauric amide, stearamide, succinamide, urea, dimetilurea, benzamide, benzanilide, N-ciclohexylpropionamide, N,N-di(hydroxyethylol)amide, ε-caprolactame, butyranilide, succinimide, and the like. Said rubber composition, thanks to a better dispersion of the silica in the same, is said to give a crosslinked rubber composition having an improved tearing resistance.

US 5,962,562 describes a method for processing a rubber composition which comprises mixing (i) 100 parts by weight of at least one elastomer containing olefinic unsaturation selected from the group consisting of natural rubber and conjugated diene homopolymers and copolymers and from copolymers of at least one conjugated diene and aromatic vinyl compound; with (ii) 0.05 to 10 parts by weight of N-(4-hydroxy-phenyl)stearamide. The presence of said N-(4-hydroxy-phenyl)stearamide in a rubber composition is said to provide lower minimum Rheometer torque which would indicate less work input required during Banbury mixing and an improved processing composition. Moreover, said stearamide, also improves flex properties and abrasion resistance of the crosslinked rubber composition.

US 6,333,375 describes a rubber composition comprising 100 part by weight of a diene rubber component, 10 to 200 part by weight of a reinforcing agent, and 0.1 to 15 parts by weight of a fatty acid salt. Preferably, said fatty acid salt is a metal salt of a fatty acid. Said rubber composition is said to give a crosslinked rubber composition having an improved heat build-up, tensile strength, abrasion resistance and processability.

US 5,656,680 describes rubber compositions including a processing aid comprising a mixture of at least one silicone fluid lubricant and at least one chemical peptizing agent as well as a zinc salt of a carboxylic acid such as zinc oleate. The aforementioned processing aid is said to improve the processability and releasability of rubber and plastic without adversely affecting and, in certain instances, improving the physical properties of the rubber or plastic such as adhesion, tack, modulus and tensile strength.

US 5,246,994 describes a rubber composition containing (A) a mixture obtained by mixing (a1) 100 parts by weight of a highly saturated, ethylenically unsaturated nitrile-conjugated diene copolymer rubber whose copolymer chain contains not more than 30% by weight of conjugated diene units, and (a2) from 10 to 100 parts by weight of an ethylenically unsaturated monomer containing at least one carboxyl group, at least a proportion of the at least one carboxyl group being metal substituted such that a molar ratio of the at least one carboxyl group to the metal falls within a range of from 1/0.5 to 1/3; (B) an organic peroxide; and (C) a fatty acid amide, from 0.2 to 15 parts by weight of the (B) organic peroxide and from 0.5 to 20 parts by weight of the (C) fatty acid amide being added to 100 parts by weight of the (A) mixture. Said rubber composition is said to provide a rubber having excellent slide characteristic in addition to high hardness, set resistance and hydrolysis resistance.

The Applicant has now found that it is possible to obtain crosslinkable elastomeric compositions capable of being used advantageously in the production of crosslinked manufactured products, in particular in the production of tyre for vehicle wheels, by using a fatty acid amide and at least one zinc salt of a carboxylic acid. In this way, it is possible to obtain a crosslinkable elastomeric composition which exhibits an improved processability and which gives a crosslinked elastomeric manufactured product endowed with an improved abrasion resistance. Moreover, said properties have been achieved without impairing the mechanical properties of said crosslinked manufactured product.

According to a first aspect, the present invention thus relates to a tyre for vehicle wheels, comprising at least one structural element including a crosslinked elastomeric material obtained by crosslinking an elastomeric composition comprising:
(a) at least one diene elastomeric polymer;
(b) at least one reinforcing filler;
(c) from 0.05 phr to 10 phr of zinc oxide;
(d) from 0.1 phr to 20 phr of at least one fatty acid amide;
(e) from 1 phr to 15 phr of at least one zinc salt of a carboxylic acid of formula R-COOH, wherein R is selected from linear or branched C₁-C₂₄ alkyl group, linear or branched C₂-C₂₄ alkenyl groups, C₅-C₂₄ cycloalkyl groups, C₆-C₂₄ aryl groups, C₇-C₂₄ alkylaryl or arylalkyl groups.

According to one preferred embodiment, the present invention relates to a tyre for vehicle wheels, comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said structural element which includes said elastomeric composition is the tread band.

For the purposes of the present description and of the claims, the term "phr" means the parts by weight of a given component of the elastomeric composition per 100 parts by weight of the elastomeric polymer.

According to one preferred embodiment, the zinc oxide (c) is added to the elastomeric composition in an amount of from 0.1 phr to 6.0 phr, preferably from 0.5 phr to 5.0 phr.

According to one preferred embodiment, the fatty acid amide (d) is added to the elastomeric composition in an amount of from 0.5 phr to 10 phr, preferably from 2.0 phr to 6.0 phr.

According to one preferred embodiment, the zinc salt of a carboxylic acid (e) is added to the elastomeric composition in an amount of from 1 phr to 10 phr, preferably from 1.0 phr to 5.0 phr.

According to one preferred embodiment, the diene elastomeric polymer (a) which may be used in the present invention may be selected from those commonly used in sulphur-crosslinkable alastomeric compositions, that are particularly suitable for producing tyres, that is to say from elastomeric polymers or copolymers with an unsaturated chain having a glass transition temperature (T_{g}) generally below 20°C, preferably in the range of from 0°C to -100°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be chosen, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be chosen, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be chosen, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which may be used in the present invention may be chosen, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The elastomeric composition for use in the present invention may optionally comprise at least one elastomeric polymer of one or more monoolefins with an olefinic comonomer or derivatives thereof (a'). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451,604, or patents US 4,742,124 and US 4,550,142).

According to one preferred embodiment, the reinforcing filler (b) which may be used in the present invention may be selected from those commonly used for crosslinked manufactured products, in particular in the production of tyres, that is to say from carbon black, silica, alumina, aluminosilicates, calcium carbonate, kaolin, or mixtures thereof.

The types of carbon black which may be used according to the present invention may be selected from those conventionally used in the production of tyres, generally having a surface area of not less than 20 m²/g (determined by CTAB absorption as described in ISO standard 6810).

The silica which may be used according to the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/g.

When a reinforcing filler comprising silica is present, the elastomeric composition may advantageously incorporate a coupling agent capable of interacting with the silica and of linking it to the elastomeric base during the vulcanization.

Coupling agents that are preferably used are those based on silane which may be identified, for example, by the following structural formula (I):

(R')₃Si-CₙH₂ₙ-X (I)

in which the groups R', which may be identical or different from each other, are selected from: alkyl, alkoxy or aryloxy groups or from halogen atoms, on condition that at least one of the groups R' is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ in which m and n are integers between 1 and 6 inclusive and the groups R are defined as above.

Among the coupling agents that are particularly preferred are bis(3-triethoxysilylpropyl)tetrasulphide and bis(3-triethoxysilylpropyl)disulphide. Said coupling agents may be used as such or as a suitable mixture with an inert filler (for example carbon black) so as to facilitate their incorporation into the elastomeric composition.

According to one preferred embodiment, said reinforcing filler (b) is added to the elastomeric composition in an amount of from 0.1 phr to 120 phr, preferably from 20 phr to 90 phr.

According to one preferred embodiment, the fatty acid amide (d) which may be used in the present invention may be selected from compounds having the following formulae (II) or (III): 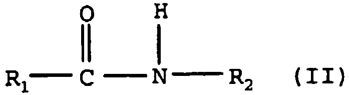 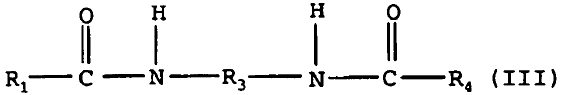 wherein:
- R₁ and R₄, which may be identical or different from each other, are selected from linear or branched C₁-C₂₄ alkyl groups, linear or branched C₂-C₂₄ alkenyl groups, C₅-C₂₄ cycloalkyl groups;
- R₃ is a linear or branched C₁-C₁₀ alkylene group;
- R₂ is hydrogen; or is selected from linear or branched C₁-C₂₄ alkyl groups, linear or branched C₂-C₂₄ alkenyl groups, C₅-C₂₄ cycloalkyl groups.

Specific examples of fatty acid amides are: acetamide, propionamide, n-butyramide, n-valeramide, n-caproamide, stearamide, lauroylamide, miristic amide, arachidamide, behenamide, ethylene-bis-stearamide, ethylene-bis-oleamide, or mixtures thereof. Stearamide is particularly preferred.

The fatty acid amides (d) may be obtained by the reaction of a fatty acid, or its acid chloride or ester, with ammonia or an amine or a diamine. More details relating to said process may be found, for example, in "Encyclopedia of Chemical Technology", Kirk-Othmer, Third Edition, Vol. 2, John Wiley & Sons, New York, 1978, pages 252-257 and in "Organic Chemistry", Fieser and Fieser, D.C. Heath and Company, Boston, 1944, pages 183-184, 232 and 242.

Examples of fatty acid amides (d) which may be used in the present invention and which are currently commercially available are the products Crodamides® from Croda.

According to one preferred embodiment, the carboxylic acids of formula R-COOH may be selected from: C₈-C₁₀ coconout acid, stearic acid, lauric acid, oleic acid, octanoic acid, myristic acid, palmitic acid, palmitoleic acid, linoleic acid, benzoic acid, chlorobenzoic acid, methylbenzoic acid, naphthyl acid. According to a preferred embodiment, said structural element is the tread band.

The zinc salt of a carboxylic acid (e) may be obtained by mixing zinc oxide, zinc hydroxide or zinc carbonate with carboxylic acids having formula R-COOH. This process may be carried out as disclosed, for example in US 5,302,315.

Examples of zinc salts of carboxylic acids (e) which may be used in the present invention and which are currently commercially available are the products Polyplastol® 6 from Great Lakes Corp., Aktiplast® PP from Rhein-Chemie, Struktol® A50L or A50P from Schill & Seilacher.

The elastomeric composition for use in the present invention may be vulcanized according to known techniques, in particular with sulphur-based vulcanizing systems commonly used for diene elastomeric polymers. To this end, in the composition, after a thermomechanical working step, a sulphur-based vulcanizing agent is incorporated together with vulcanization accelerators. During the last mentioned working step, the temperature is generally kept below 120°C and preferably below 100°C, so as to avoid any undesired pre-cross-linking phenomena.

The vulcanizing agent most advantageously used is sulphur, or molecules containing sulphur (sulphur donors), with accelerators and activators known to those skilled in the art.

Besides the zinc oxide, other activators may be present in the elastomeric composition according to the present invention. Said activators may be selected from fatty acids (e.g. stearic acid) and also from other oxides such as, for example, BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

The elastomeric composition for use in the present invention may comprise other commonly used additives chosen on the basis of the specific application for which the composition is intended. For example, the following may be added to said composition: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the elastomeric composition. The amount of plasticizer generally ranges from 2 phr to 100 phr, preferably from 5 phr to 50 phr.

The elastomeric composition for use in the present invention may be prepared by mixing together the polymeric components with the reinforcing filler and with the other additives optionally present according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss) or of corotating or counter-rotating twin-screw type or on a two-roll-mill.

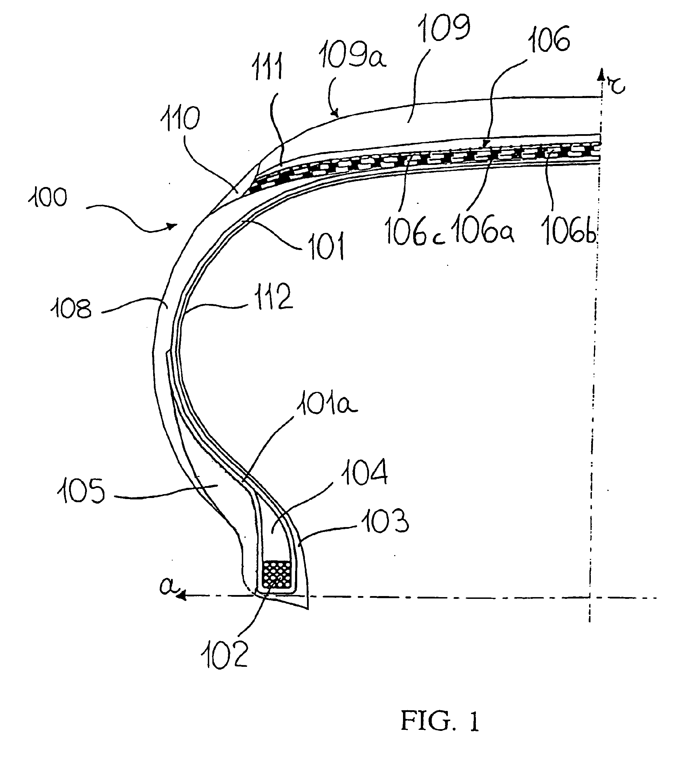

The present invention will now be illustrated in further detail by means of a number of illustrative embodiments, with reference to the attached Fig. 1, which is a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead wires (102). The association between the carcass ply (101) and the bead wires (102) is achieved here by folding back the opposite lateral edges of the carcass ply (101) around the bead wires (102) so as to form the so-called carcass back-folds (101a) as shown in Fig. 1.

Alternatively, the conventional bead wires (102) can be replaced with a pair of circumferentially inextensible annular inserts formed from elongate components arranged in concentric coils (not represented in Fig. 1) (see, for example, European patent applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric compound. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. Each bead wire (102) is enclosed in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) in which the bead wires (102) are embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109), which can be produced according to the present invention, has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109). A underlayer which forms, with the tread band (109), a structure commonly known as a "cap and base" (not represented in Fig. 1) may optionally be placed between the belt structure (106) and the tread band (109).

A layer of elastomeric material (111) which serves as an "attachment sheet", i.e. a sheet capable of providing the connection between the tread band (109) and the belt structure (106), may be placed between the tread band (109) and the belt structure (106).

In the case of tubeless tyres, a rubber layer (112) generally known as a "liner", which provides the necessary impermeability to the inflation air of the tyre, may also be provided in a radially internal position relative to the carcass ply (101).

The process for producing the tyre according to the present invention can be carried out according to techniques and using apparatus that are known in the art, as described, for example, in patents EP 199,064, US 4,872,822, US 4,768,937, said process including at least one stage of manufacturing the green tyre and at least one stage of vulcanizing this tyre.

More particularly, the process for producing the tyre comprises the stages of preparing, beforehand and separately from each other, a series of semi-finished products corresponding to the various parts of the tyre (carcass plies, belt structure, bead wires, fillers, side walls and tread band) which are then combined together using a suitable manufacturing machine. Next, the subsequent vulcanization stage welds the abovementioned semi-finished products together to give a monolithic block, i.e. the finished tyre.

Naturally, the stage of preparing the abovementioned semi-finished products will be preceded by a stage of preparing and moulding the various blends, of which said semi-finished products are made, according to conventional techniques.

The green tyre thus obtained is then passed to the subsequent stages of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned patent applications EP 928,680 and EP 928,702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained as decribed, for example, in patent EP 242,840. The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material can vary in general between 3 min and 90 min and depends mainly on the dimensions of the tyre. When the vulcanization is complete, the tyre is removed from the vulcanization mould.

Although the present invention has been illustrated specifically in relation to a tyre, other crosslinked elastomeric manufactured products that can be produced may be, for example, conveyor belts, driving belts or flexible tubes.

The present invention will be further illustrated below by means of a number of preparation examples, which are given for purely indicative purposes and without any limitation of this invention.

### EXAMPLES 1-4

### Preparation of the elastomeric compositions

The elastomeric compositions given in Table 1 were prepared as follows (the amounts of the various components are given in phr).

All the ingredients, except for the sulphur, the TBBS and the PVI, were mixed together in an internal mixer of the type with tangential rotors (Banbury) for about 5 min (1^{st} Stage). As soon as the temperature reached 145±5°C, the elastomeric composition was discharged. The sulphur, the TBBS and the PVI were then added and mixing was carried out on a two-roll mill (2^{nd} Stage).

**TABLE 1**

| EXAMPLES | 1 (*) | 2 (*) | 3 (*) | 4 |
|---|---|---|---|---|
| 1^{st} STAGE | | | | |
| NR | 60.0 | 60.0 | 60.0 | 60.0 |
| BR | 40.0 | 40.0 | 40.0 | 40.0 |
| Carbon black | 55.0 | 55.0 | 55.0 | 55.0 |
| Stearic acid | 1.0 | 1.0 | 1.0 | 1.0 |
| Zinc oxide | 3.5 | 3.5 | 3.5 | 3.5 |
| Polyplastol® 6 | - | 2.0 | - | 2.0 |
| Wax | 1.0 | 1.0 | 1.0 | 1.0 |
| Aromatic oil | 5.0 | 5.0 | 5.0 | 5.0 |
| Crodamide® SR | - | - | 2.0 | 2.0 |
| 6PPD | 3.0 | 3.0 | 3.0 | 3.0 |

| 2^{nd} STAGE | | | | |
|---|---|---|---|---|
| TBBS | 1.7 | 1.7 | 1.7 | 1.7 |
| PVI | 0.2 | 0.2 | 0.2 | 0.2 |
| Sulphur | 1.2 | 1.2 | 1.2 | 1.2 |

| | | | | |
|---|---|---|---|---|
| (*) comparative. NR: natural rubber; BR: cis-1,4-polybutadiene (Europrene® Neocis BR40 - EniChem Elastomeri); Carbon black: N115 (Vulcan® 9 - Cabot); Polyplastol® 6: mixture of zinc salts of fatty acids (palmitic acid, stearic acid and oleic acid being present in major amount) (Great Lakes Chemical Corp.); Wax: composition of microcrystalline wax (Antilux® 654 - Bayer); Crodamide® SR: stearamide (Croda); 6PPD (anti-ageing agent): N-1,3-dimethylbutyl-N'-p-phenylendiamine (Vulkanox® 4020 - Bayer); TBBS (accelerator): N-t-butyl-2-benzothiazyl-sulphenamide (Vulkacit® NZ - Bayer); PVI (retardant): N-cyclohexylthiophthalimide (Santogard® PVI - Monsanto). | | | | |

The Mooney viscosity ML(1+4) at 100°C was measured, according to ISO standard 289/1, on the non-crosslinked compositions obtained as described above. The results obtained are given in Table 2.

The following properties were measured on samples of said elastomeric compositions crosslinked at 170°C for 10 minutes:
- tensile mechanical properties at 23°C according to ISO standard 37 (CA1 = stress at 100% elongation; CA3 = stress at 300% elongation; S.B. = stress at break; E.B. = elongation at break);
- hardness in IHRD degree at 23°C according to ISO standard 48;
- rebound at 23°C according to ISO standard 4662;
- abraded volume at 23°C according to DIN standard 53516 expressed as relative volumetric loss with respect to the reference composition of Example 1 (set at 100).

The results obtained are given in Table 2.

**TABLE 2**

| EXAMPLES | 1 (*) | 2 (*) | 3 (*) | 4 |
|---|---|---|---|---|
| Mooney Viscosity (ML1+4) | - | 99.80 | 110.20 | 89.00 |
| CA 1 (MPa) | 2.72 | 2.74 | 2.68 | 2.74 |
| CA 3 (MPa) | 13.83 | 13.68 | 13.40 | 13.31 |
| S.B. (MPa) | 21.72 | 21.68 | 21.65 | 21.61 |
| E.B. (%) | 451.50 | 454.80 | 468.10 | 465.80 |
| IRHD hardness at 23°C | 75.20 | 76.00 | 76.20 | 77.00 |
| Rebound (%) | 49.00 | 47.00 | 46.20 | 46.20 |
| DIN abrasion (index) | 100 | 94 | 115 | 110 |

| | | | | |
|---|---|---|---|---|
| (*): comparative. | | | | |

The results given in Table 2 show that the elastomeric composition for use in the present invention (Example 4) has a lower Mooney Viscosity value and, consequently, an improved processability. Moreover, the crosslinked manufactured product obtained from said elastomeric composition shows a better abrasion resistance. Said results have been obtained without impairing the mechanical properties of the crosslinked manufactured product.

### EXAMPLES 5-8

### Preparation of the elastomeric compositions

The elastomeric compositions given in Table 3 were prepared as follows (the amounts of the various components are given in phr).

All the ingredients, except for the zinc oxide, the sulphur, the 6PPD, the DPG80 and the CBS, were mixed together in an internal mixer of the type with tangential rotors (Banbury) for about 5 min (1^{st} Stage). As soon as the temperature reached 145±5°C, the elastomeric composition was discharged. Then zinc oxide and 6PPD were added and mixing was carried out in an internal mixer of the type with tangential rotors (Banbury) for about 4 min (2^{nd} Stage). As soon as the temperature reached 125±5°C, the elastomeric composition was discharged Then the sulphur, the DPG80 and the CBS were added and mixing was carried out in a two-roll mill (3^{rd} Stage).

**TABLE 3**

| EXAMPLES | 5 (*) | 6 (*) | 7 (*) | 8 |
|---|---|---|---|---|
| 1^{st} STAGE | | | | |
| BR | 25.0 | 25.0 | 25.0 | 25.0 |
| SBR | 75.0 | 75.0 | 75.0 | 75.0 |
| Silica | 65.0 | 65.0 | 65.0 | 65.0 |
| Silane | 10.0 | 10.0 | 10.0 | 10.0 |
| Polyplastol® 6 | - | 2.0 | - | 2.0 |
| Crodamide® SR | - | - | 2.0 | 2.0 |
| Stearic acid | 2.0 | 2.0 | 2.0 | 2.0 |
| Wax | 1.0 | 1.0 | 1.0 | 1.0 |
| Aromatic oil | 5.0 | 5.0 | 5.0 | 5.0 |

| 2^{nd} STAGE | | | | |
|---|---|---|---|---|
| Zinc oxide | 2.5 | 2.5 | 2.5 | 2.5 |
| 6PPD | 2.0 | 2.0 | 2.0 | 2.0 |

| 3^{rd} STAGE | | | | |
|---|---|---|---|---|
| DPG80 | 2.2 | 2.2 | 2.2 | 2.2 |
| CBS | 1.6 | 1.6 | 1.6 | 1.6 |
| Sulphur | 1.0 | 1.0 | 1.0 | 1.0 |

| | | | | |
|---|---|---|---|---|
| (*) comparative. BR: cis-1,4-polybutadiene (Europrene® Neocis BR40 - EniChem Elastomeri); SBR: styrene/butadiene copolymer, obtained by emulsion polymerization, containing 25% by weight of styrene, mixed with 37.5 phr of oil (SBR 5025 - Bayer); Silica: precipitated silica (Ultrasil® VN3 - Degussa); Silane: bis(3-triethoxysilylpropyl)tetrasulphide (product X50S containing 50% carbon black and 50% silane - Degussa) (the amounts given in Table 3 refer only to the silane); Polyplastol® 6: mixture of zinc salts of fatty acids (palmitic acid, stearic acid and oleic acid being present in major amount) (Great Lakes Chemical Corp.); Crodamide® SR: stearamide (Croda); Wax: composition of microcrystalline wax (Antilux® 654 - Bayer); 6PPD (anti-ageing agent): N-1,3-dimethylbutyl-N'-p-phenylendiamine (Vulkanox® 4020 - Bayer); DPG80 (accelerator): predispersed 80% diphenylguanidine (Bayer); CBS (accelerator): N-cyclohexyl-2-benzothiazyl-sulphenamide (Santocure® - Monsanto). | | | | |

The Mooney viscosity ML(1+4) at 100°C was measured, according to ISO standard 289/1, on the non-crosslinked compositions obtained as described above. The results obtained are given in Table 4.

The following properties were measured on samples of said elastomeric compositions crosslinked at 170°C for 10 minutes:
- tensile mechanical properties at 23°C according to ISO standard 37 (CA1 = stress at 100% elongation; CA3 = stress at 300% elongation; S.B. = stress at break; E.B. = elongation at break);
- hardness in IHRD degree at 23°C according to ISO standard 48;
- rebound at 23°C according to ISO standard 4662;
- abraded volume at 23°C according to DIN standard 53516 expressed as relative volumetric loss with respect to the reference composition of Example 5 (set at 100).

The results obtained are given in Table 4.

**TABLE 4**

| EXAMPLES | 5 (*) | 6 (*) | 7 (*) | 8 |
|---|---|---|---|---|
| Mooney Viscosity (ML1+4) | 100.50 | 79.90 | 95.70 | 83.30 |
| CA 1 (MPa) | 2.36 | 2.30 | 2.52 | 2.47 |
| CA 3 (MPa) | 11.19 | 10.59 | 11.55 | 11.13 |
| S.B. (MPa) | 17.81 | 16.04 | 16.88 | 14.49 |
| E.B. (%) | 454.50 | 443.70 | 432.50 | 397.00 |
| IRHD hardness at 23°C | 76.80 | 74.50 | 76.40 | 74.30 |
| Rebound (%) | 34.00 | 34.00 | 34.40 | 33.20 |
| DIN abrasion (index) | 100 | 85 | 105 | 106 |

| | | | | |
|---|---|---|---|---|
| (*): comparative. | | | | |

The results given in Table 4 show that the elastomeric composition for use in the present invention (Example 8) has a lower Mooney Viscosity value and, consequently, an improved processability. Moreover, the crosslinked manufactured product obtained from said elastomeric composition shows a better abrasion resistance. Said results have been obtained without impairing the mechanical properties of the crosslinked manufactured product.

## Claims

1. Tyre for vehicle wheels, comprising at least one structural element including a crosslinked elastomeric material obtained by crosslinking an elastomeric composition comprising:
(a) at least one diene elastomeric polymer;
(b) at least one reinforcing filler;
(c) from 0.05 phr to 10 phr of zinc oxide;
(d) from 0.1 phr to 20 phr of at least one fatty acid amide;
(e) from 1 phr to 15 phr of at least one zinc salt of a carboxylic acid of formula R-COOH, wherein R is selected from linear or branched C₁-C₂₄ alkyl groups, linear or branched C₂-C₂₄ alkenyl groups, C₅-C₂₄ cycloalkyl groups, C₆-C₂₄ aryl groups, C₇-C₂₄ alkylaryl or arylalkyl groups.

2. Tyre according to claim 1, comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said structural element which includes said elastomeric composition is the tread band.

3. Tyre according to claim 1 or 2, in which the zinc oxide (c) is added to the elastomeric composition in an amount of from 0.1 phr to 6.0 phr.

4. Tyre according to claim 3, in which the zinc oxide (c) is added to the elastomeric composition in an amount of from 0.5 phr to 5.0 phr.

5. Tyre according to claim 1 or 2, in which the fatty acid amide (d) is added to the elastomeric composition in an amount of from 0.5 phr to 10 phr.

6. Tyre according to claim 5, in which the fatty acid amide (d) is added to the elastomeric composition in an amount of from 2.0 phr to 6.0 phr.

7. Tyre according to claim 1 or 2, in which the zinc salt of a carboxylic acid (e) is added to the elastomeric composition in an amount of from 1 phr to 10 phr.

8. Tyre according to claim 7, in which the zinc salt of a carboxylic acid (e) is added to the elastomeric composition in an amount of from 1.0 phr to 5.0 phr.

9. Tyre according to any one of the preceding claims, in which the diene elastomeric polymer (a) has a glass transition temperature (T_{g}) below 20°C.

10. Tyre according to claim 9, in which the diene elastomeric polymer (a) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

11. Tyre according to any one of the preceding claims, in which the elastomeric composition comprises at least one elastomeric polymer of one or more monoolefins with an olefinic comonomer or derivatives thereof (a').

12. Tyre according to claim 10, in which the elastomeric polymer (a') is selected from: ethylene/propylene copolymers (EPR) or ethylene/propylene/diene copolymers (EPDM); polyisobutene; butyl rubbers; halobutyl rubbers; or mixtures thereof.

13. Tyre according to any one of the preceding claims, in which the reinforcing filler (b) is selected from carbon ..black, silica, alumina, aluminosilicates, calcium carbonate, kaolin, or mixtures thereof.

14. Tyre according to claim 13, in which the reinforcing filler (b) is carbon black.

15. Tyre according to claim 13, in which the reinforcing filler (b) is silica.

16. Tyre according to any one of the preceding claims, in which the reinforcing filler (b) is added to the elastomeric composition in an amount of from 0.1 phr to 120 phr.

17. Tyre according to claim 16, in which the reinforcing filler (b) is added to the elastomeric composition in an amount of from 20 phr to 90 phr.

18. Tyre according to any one of the preceding claims, in which the fatty acid amide (d) is selected from compounds having the following formulae (II) or (III): 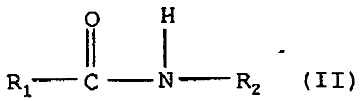 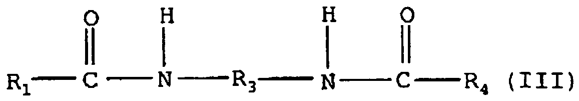 wherein:
- R₁ and R₄, which may be identical or different from each other, are selected from linear or branched C₁-C₂₄ alkyl groups, linear or branched C₂-C₂₄ alkenyl groups, C₅-C₂₄ cycloalkyl groups;
- R₃ is a linear or branched C₁-C₁₀ alkylene group;
- R₂ is hydrogen; or is selected from linear or branched C₁-C₂₄ alkyl groups, linear or branched C₂-C₂₄ alkenyl groups, C₅-C₂₄ cycloalkyl groups.

19. Tyre according to claim 18, in which the fatty acid amide (d) is selected from: acetamide, propionamide, n-butyramide, n-valeramide, n-caproamide, stearamide, lauroylamide, miristic amide, arachidamide, behenamide, ethylene-bis-stearamide, ethylene-bis-oleamide, or mixtures thereof.

20. Tyre according to claim 19, in which the fatty acid amide (d) is stearamide.

21. Tyre according to any one of the preceding claims, in which the carboxylic acids of formula R-COOH are selected from: C₈-C₁₀ coconout acid, stearic acid, lauric acid, oleic acid, octanoic acid, myristic acid, palmitic acid, palmitoleic acid, linoleic acid, benzoic acid, chlorobenzoic acid, methylbenzoic acid, naphthyl acid.

22. Tyre according to any one of the preceding claims, in which the structural element is the tread band.

## Patentansprüche

1. Reifen für Fahrzeugräder, der mindestens ein Strukturelement umfasst, das ein vernetztes Elastomermaterial einschließt, das durch Vernetzen einer Elastomerzusammensetzung erhalten wird, umfassend:
(a) mindestens ein Dien-Elastomerpolymer;
(b) mindestens einen verstärkenden Füllstoff;
(c) 0,05 phr bis 10 phr Zinkoxid;
(d) von 0,1 phr bis 20 phr mindestens eines Fettsäureamids;
(e) von 1 phr bis 15 phr mindestens eines Zinksalzes einer Carbonsäure der Formel R-COOH, worin R aus linearen oder verzweigten C₁₋₂₄-Alkylgruppen, linearen oder verzweigten C₂₋₂₄-Alkenylgruppen, C₅₋₂₄-Cycloalkylgruppen, C₆₋₂₄-Arylgruppen, C₇₋₂₄-Alkylaryl- oder Arylalkylgruppen ausgewählt ist.

2. Reifen gemäß Anspruch 1, umfassend:
- eine Karkassenstruktur mit mindestens einer Karkassenlage mit einer im wesentlichen toroidalen Form, deren gegenüberliegende Seitenkanten mit entsprechenden rechten und linken Wulstkabeln assoziiert sind, wobei jedes Wulstkabel in einem entsprechenden Wulst eingeschlossen ist;
- eine Gürtelstruktur, die mindestens einen Gürtelstreifen umfasst, der in einer in Bezug auf den Umfang äußeren Position relativ zur Karkassenstruktur angebracht ist;
- ein Laufflächenband, das in Umfangsrichtung über die Gürtelstruktur gelegt ist;
- ein Paar von Seitenwänden, die lateral auf gegenüberliegenden Seiten relativ zur Karkassenstruktur angebracht sind;
worin das Strukturelement, das die Elastomerzusammensetzung einschließt, das Laufflächenband ist.

3. Reigen gemäß Anspruche 1 oder 2, worin das Zinkoxid (c) zur Elastomerzusammensetzung in einer Menge von 0,1 phr bis 6,0 phr hinzugefügt ist.

4. Reifen gemäß Anspruch 3, worin das Zinkoxid (c) zur Elastomerzusammensetzung in einer Menge von 0,5 phr bis 5,0 phr hinzugefügt ist.

5. Reifen gemäß Anspruch 1 oder 2, worin das Fettsäureamid (d) zur Elastomerzusammensetzung in einer Menge von 0,5 phr bis 10 phr hinzugefügt ist.

6. Reifen gemäß Anspruch 5, worin das Fettsäureamid (d) zur Elastomerzusammensetzung in einer Menge von 2 phr bis 6,0 phr hinzugefügt ist.

7. Reifen gemäß Anspruch 1 oder 2, worin das Zinksalz der Carbonsäure (e) zur Elastomerzusammensetzung in einer Menge von 1 phr bis 10 phr hinzugefügt ist.

8. Reifen gemäß Anspruch 7, worin das Zinksalz der Carbonsäure (e) zur Elastomerzusammensetzung in einer Menge von 1,0 phr bis 5,0 phr hinzugefügt ist.

9. Reifen gemäß irgendeinem der vorhergehenden Ansprüche, worin das Dien-Elastomerpolymer (a) eine Glasübergangstemperatur (T_{g}) unterhalb von 20°C hat.

10. Reifen gemäß Anspruch 9, worin das Dien-Elastomerpolymer (a) ausgewählt ist aus: Cis-1,4-Polyisopren, 3,4-Polyisopren, Polybutadien, optional halogenierte Isopren/Isobuten-Copolymere, 1,3-Butadien/Acrylnitril-Copolymere, Styrol/1,3-Butadien-Copolymere, Styrol/Isopren/1,3-Butadien-Copolymere, Styrol/1,3-Butadien/Acrylnitril-Copolymere oder Mischungen davon.

11. Reifen gemäß irgendeinem der vorhergehenden Ansprüche, worin die Elastomerzusammensetzung mindestens ein Elastomerpolymer aus ein oder mehreren Monoolefinen mit einem olefinischen Comonomer oder Derivaten davon (a') umfasst.

12. Reifen gemäß Anspruch 11, worin das Elastomerpolymer (a') ausgewählt ist aus: Ethylen/Propylen-Copolymeren (EPR) oder Ethylen/Propylen/Dien-Copolymeren (EPDM); Polyisobuten; Butylkautschuk; Halobutylkautschuk; oder Mischungen davon.

13. Reifen gemäß irgendeinem der vorhergehenden Ansprüche, worin der verstärkende Füllstoff (b) aus Ruß, Siliziumoxid, Aluminiumoxid, Aluminosilikaten, Kalziumcaronat, Kaolin oder Mischungen davon ausgewählt ist.

14. Reifen gemäß Anspruch 13, worin der verstärkende Füllstoff (b) Ruß ist.

15. Reifen gemäß Anspruch 13, worin der verstärkende Füllstoff (b) Siliziumdioxid ist.

16. Reifen gemäß irgendeinem der vorhergehenden Ansprüche, worin der verstärkende Füllstoff (b) zur Elastomerzusammensetzung in einer Menge von 0,1 phr bis 120 phr hinzugefügt wird.

17. Reifen gemäß Anspruch 16, worin der verstärkende Füllstoff (b) zur Elastomerzusammensetzung in einer Menge von 20 phr bis 90 phr hinzugefügt wird.

18. Reifen gemäß irgendeinem der vorhergehenden Ansprüche, worin das Fettsäureamid (d) aus Verbindungen mit den folgenden Formeln (II) oder (III) ausgewählt ist: 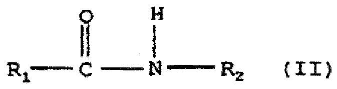 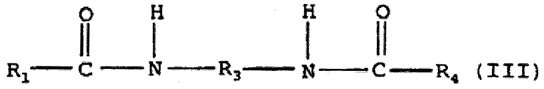 worin:
- R₁ und R₄, die gleich oder unterschiedlich voneinander sein können, aus linearen oder verzweigten C₁₋₂₄-Alkylgruppen, linearen oder verzweigten C₂₋₂₄-Alkenylgruppen, C₅₋₂₄-Cycloalkylgruppen ausgewählt sind;
- R₃ eine linearen oder verzweigten C₁₋₁₀-Alkylengruppe ist;
- R₂ Wasserstoff ist; oder ausgewählt ist aus linearen oder verzweigten C₁₋₂₄-Alkylgruppen, linearen oder verzweigten C₂₋₂₄-Alkenylgruppen, C₅₋₂₄-Cycloalkylengruppen.

19. Reifen gemäß Anspruch 18, worin das Fettsäureamid (d) ausgewählt ist aus: Acetamid, Propionamid, n-Butyramid, n-Valeramid, n-Caproamid, Stearamid, Lauroylamid, Myristinamid, Arachidamid, Behenamid, Ethylen-bis-Stearamid, Ethylen-bis-Oleamid oder Mischungen davon.

20. Reifen gemäß Anspruch 19, worin das Fettsäureamid (d) Stearamid ist.

21. Reifen gemäß irgendeinem der vorhergehenden Ansprüche, worin die Carbonsäuren der Formel R-COOH ausgewählt sind aus: C₈₋₁₀-Kokosnusssäure, Stearinsäure, Laurinsäure, Ölsäure, Octansäure, Myristinsäure, Palmitinsäure, Palmitoleinsäure, Linolsäure, Benzoesäure, Chlorbenzoesäure, Methylbenzoesäure, Naphthylsäure.

22. Reifen gemäß irgendeinem der vorhergehenden Ansprüche, worin das Strukturelement das Laufflächenband ist.

## Revendications

1. Pneu pour roues de véhicules, comprenant au moins un élément structurel incluant un matériau élastomère réticulé obtenu par réticulation d'une composition élastomère comprenant :
(a) au moins un polymère élastomère de diène ;
(b) au moins une charge de renfort ;
(c) de 0,05 partie pour cent de caoutchouc à 10 parties pour cent de caoutchouc d'oxyde de zinc ;
(d) de 0,1 partie pour cent de caoutchouc à 20 parties pour cent de caoutchouc d'au moins un amide d'acide gras ;
(e) de 1 partie pour cent de caoutchouc à 15 parties pour cent de caoutchouc d'au moins un sel de zinc d'un acide carboxylique de formule R-COOH, dans lequel R est choisi parmi les groupes alkyles en C₁-C₂₄ linéaires ou ramifiés, les groupes alcényles en C₂-C₂₄ linéaires ou ramifiés, les groupes cycloalkyles en C₅-C₂₄, les groupes aryles en C₆-C₂₄, les groupes alkylaryles ou arylalkyles en C₇-C₂₄.

2. Pneu selon la revendication 1, comprenant :
- une structure de carcasse avec au moins une nappe de carcasse mise en forme en une configuration sensiblement toroïdale, les bords latéraux opposés de celle-ci étant respectivement associés avec des côtés gauche et droit de câbles de talon, chaque câble de talon étant enfermé dans un talon respectif ;
- une structure de ceinture comprenant au moins une bande de ceinture appliquée en un emplacement circonférentiellement externe à ladite structure de carcasse ;
- une bande de roulement superposée circonférentiellement sur ladite structure de ceinture ;
- une paire de flancs appliquée latéralement sur des côtés opposés par rapport à ladite structure de carcasse ;
dans lequel ledit élément structurel qui inclut ladite composition élastomère est la bande de roulement.

3. Pneu selon la revendication 1 ou 2, dans lequel l'oxyde de zinc (c) est ajouté à la composition élastomère en une quantité comprise entre 0,1 partie pour cent de caoutchouc à 6,0 parties pour cent de caoutchouc.

4. Pneu selon la revendication 3, dans lequel l'oxyde de zinc (c) est ajouté à la composition élastomère en une quantité comprise entre 0,5 partie pour cent de caoutchouc et 5,0 parties pour cent de caoutchouc.

5. Pneu selon la revendication 1 ou 2, dans lequel l'amide d'acide gras (d) est ajouté à la composition élastomère en une quantité comprise entre 0,5 partie pour cent de caoutchouc et 10 parties pour cent de caoutchouc.

6. Pneu selon la revendication 5, dans lequel l'amide d'acide gras (d) est ajouté à la composition élastomère en une quantité comprise 2,0 parties pour cent de caoutchouc et 6,0 parties pour cent de caoutchouc.

7. Pneu selon la revendication 1 ou 2, dans lequel le sel de zinc d'un acide carboxylique (e) est ajouté à la composition élastomère en une quantité entre 1,0 partie pour cent de caoutchouc et 10 parties pour cent de caoutchouc.

8. Pneu selon la revendication 7, dans lequel le sel de zinc d'acide carboxylique est ajouté à la composition élastomère en une quantité comprise entre 1,0 partie pour cent de caoutchouc et 5,0 parties pour cent de caoutchouc.

9. Pneu selon l'une quelconque des revendications précédentes, dans lequel le polymère élastomère de diène (a) a une température de transition vitreuse (Tg) inférieure à 20ºC.

10. Pneu selon la revendication 9, dans lequel le polymère élastomère de diène (a) est choisi parmi : cis-1,4-polyisoprène, 3,4-polyisoprène, polybutadiène, copolymères isoprène/isobutène éventuellement halogénés, copolymères 1,3-butadiène/acrylonitrile, copolymères styrène/ 1,3- butadiène, copolym ères styrène/ isoprène/ 1,3-butadiène, copolymères styrène/1,3-butadiène/acrylonitrile, ou des mélanges de ceux-ci.

11. Pneu selon l'une quelconque des revendications précédentes, dans lequel la composition élastomère comprend au moins un polymère élastomère d'une ou plusieurs monooléfines avec un comonomère oléfinique ou des dérivés de ceux-ci (a').

12. Pneu selon la revendication 10, dans lequel le polymère élastomère (a') est choisi parmi : des copolymères éthylène/propylène (EPR) ou copolymères éthylène/propylène/diène (EPDM) ; polyisobutène ; caoutchoucs butyles ; caoutchoucs halogénobutyles ; ou des mélanges de ceux-ci.

13. Pneu selon l'une quelconque des revendications précédentes, dans lequel la charge de renfort (b) est choisie parmi le noir de carbone, la silice, l'alumine, les aluminosilicates, le carbonate de calcium, le kaolin, ou des mélange de ceux-ci.

14. Pneu selon la revendication 13, dans lequel la charge de renfort (b) est le noir de carbone.

15. Pneu selon la revendication 13, dans lequel la charge de renfort (b) est la silice.

16. Pneu selon l'une quelconque des revendications précédentes, dans lequel la charge de renfort (b) est ajoutée à la composition élastomère en une quantité comprise entre 0,1 partie pour cent de caoutchouc et 120 parties pour cent de caoutchouc.

17. Pneu selon la revendication 16, dans lequel la charge de renfort (b) est ajoutée à la composition élastomère en une quantité entre 20 parties pour cent de caoutchouc et 90 parties pour cent de caoutchouc.

18. Pneu selon l'une quelconque des revendications précédentes, dans lequel l'amide d'acide gras (d) est choisi parmi des composés ayant la
formule suivante (II) ou (III) : 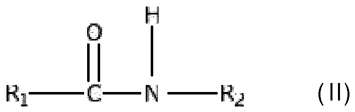 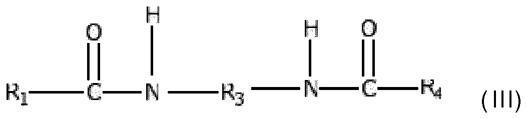 dans laquelle :
- R₁ et R₄, qui peuvent être identiques ou différents l'un de l'autre, sont choisis parmi les groupes alkyles en C₁-C₂₄ linéaires ou ramifiés, les groupes alcényles en C₂-C₂₄ linéaires ou ramifiés, les groupes cycloalkyles en C₅-C₂₄ ;
- R₃ est un groupe alkylène en C₁-C₁₀ linéaire ou ramifié ;
- R₂ est un atome d'hydrogène ; ou est choisi parmi des groupes alkyles en C₁-C₂₄ linéaires ou ramifiés, les groupes alcényles C₂-C₂₄ linéaires ou ramifiés, les groupes cycloalkyles en C₅-C₂₄.

19. Pneu selon la revendication 18, dans lequel l'am ide d'acide gras (d) est choisi parmi : l'acétamide, le propionam ide, le n-butyramide, le n-valéram ide, le n-caproam ide, le stéaramide, le laurylam ide, l'am ide myristique, l'arachidamide, le béhénamide, l'éthylène bis stearamide, l'éthylène bis oléamide ou les mélanges de ceux-ci.

20. Pneu selon la revendication 19, dans lequel l'am ide d'acide gras (d) est le stéaramide.

21. Pneu selon l'une quelconque des revendications précédentes, dans lequel les acides carboxyliques de formule R-COOH sont choisis parmi : l'acide de noix de coco en C₈-C₁₀, l'acide stéarique, l'acide laurique, l'acide oléique, l'acide octanoïque, l'acide myristique, l'acide palmitique, l'acide palmitoléique, l'acide linoléique, l'acide benzoïque, l'acide chlorobenzoïque, l'acide méthylbenzoïque, l'acide naphtyle.

22. Pneu selon l'une quelconque des revendications précédentes, dans lequel l'élément structurel est la bande de roulement.
